(19) Europäisches Patentamt
European Patent Office
Office européen des brevets

(11) Veröffentlichungsnummer: **0 343 477 B1**

# (12) EUROPÄISCHE PATENTSCHRIFT

(45) Veröffentlichungstag der Patentschrift: **01.12.93**

(51) Int. Cl.[5]: **C08F 246/00**, C08F 220/36, C08F 220/60, C09D 201/02, C09J 201/02, //C14C9/00, C04B26/06,C04B24/26, D21H17/57

(21) Anmeldenummer: **89108700.9**

(22) Anmeldetag: **16.05.89**

Die Akte enthält technische Angaben, die nach dem Eingang der Anmeldung eingereicht wurden und die nicht in dieser Patentschrift enthalten sind.

## (54) Harnstoffgruppen enthaltende Dispersionspolymerisate auf Basis ethylenisch ungesättigter Monomerer, Verfahren zu ihrer Herstellung und ihre Verwendung.

(30) Priorität: **21.05.88 DE 3817469**

(43) Veröffentlichungstag der Anmeldung:
**29.11.89 Patentblatt 89/48**

(45) Bekanntmachung des Hinweises auf die Patenterteilung:
**01.12.93 Patentblatt 93/48**

(84) Benannte Vertragsstaaten:
**AT BE CH DE ES FR GB GR IT LI NL SE**

(56) Entgegenhaltungen:
**DE-A- 2 437 639**
**DE-A- 3 817 468**
**GB-A- 761 901**

(73) Patentinhaber: **HOECHST AKTIENGESELLSCHAFT**

**D-65926 Frankfurt(DE)**

(72) Erfinder: **Rauterkus, Karl Josef, Dr.**
**Im Hain 2**
**D-6233 Kelkheim Taunus(DE)**
Erfinder: **Huth, Hans-Ulrich, Dr.**
**Finkenweg 6**
**D-6073 Egelsbach(DE)**
Erfinder: **Angelmayer, Karl-Hans**
**Steinheimer Strasse 53**
**D-6228 Eltville(DE)**

EP 0 343 477 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Dispersionspolymerisate auf der Basis von ethylenisch ungesättigten Monomeren, die Einheiten aus ethylenisch ungesättigten Harnstoffderivaten enthalten, Verfahren zu ihrer Herstellung insbesondere durch radikalisch initiierte Emulsions-, Suspensions- oder Perl-Polymerisation bzw. -Copolymerisation und ihre Verwendung als Beschichtungsmittel, vorzugsweise in wäßriger Dispersionsform, insbesondere als korrosionsverhindernde Metallbeschichtungsmittel, Klebstoffe, geformte Kunststoffe sowie als Bindemittel und Hilfsmittel in chemisch-technischen Zubereitungen.

Polymerisate, die Harnstoffgruppen enthalten, sind bereits bekannt und werden üblicherweise durch Polyaddition aus (Poly-)Isocyanaten und mono- oder polyfunktionellen Aminoverbindungen unter Bildung von Präpolymeren und nachfolgende weitere Vernetzung oder durch Vernetzung von Amino- und Isocyanatgruppen enthaltenden oligomeren Verbindungen, deren Amino- bzw. Isocyanatgruppen gegebenenfalls verkappt sind, hergestellt. Die hierbei unter Harnstoffgruppenbildung resultierenden Produkte stellen Polymere dar, deren Harnstoffgruppen bekanntlich Bestandteil der Polymer-Hauptketten sind. Die Polyadditionsreaktionen werden üblicherweise in Substanz oder, bevorzugt, in inerten organischen Lösungsmitteln durchgeführt. Die Polyaddition in inerten Lösungsmitteln hat u. a. den Vorteil der leichteren Reaktionsführung und der einfacheren Abführung der Reaktionswärme und vereinfacht außerdem die spätere Rezeptierung der Polymeren zu lösungsmittelhaltigen Beschichtungsmitteln, Lacken oder Klebstoffen. Demgegenüber erfordert eine Verwendung dieser Additionspolyharnstoffpolymerisate in wäßrigen Systemen, z. B. als wäßrige Dispersionen oder als wäßrige Lacke, bekanntlich aufwendige Maßnahmen, um z. B. das Polymerisat zunächst in einem organischen Lösungsmittel in der erforderlichen Konzentration zu lösen, die Lösung in eine wäßrige Form zu überführen bzw. in einem wäßrigen Medium zu dispergieren und zu stabilisieren und anschließend das organische Lösungsmittel wieder aus dem wäßrigen System zu entfernen.

Die in den Polymerketten der Polyharnstoffpolymerisate vorhandenen Harnstoffgruppen können starke Wechselwirkungen innerhalb der Polymerketten ausüben, was bekanntlich u. a. ihre Eignung zur Verwendung als wasser- und chemikalienbeständige Beschichtungen, Bindemittel, Fasern und Formkörper begünstigt. Hervorzuheben ist dabei auch die sehr gute Haftung von Polyharnstoffpolymerisaten auf den verschiedensten Substraten aufgrund starker polarer Wechselwirkungen mit diesen Substraten, besonders auf Metallen und insbesondere auf Eisen, wobei auf Eisen u. a. zudem eine gute Korrosionsschutzwirkung resultiert. Polyharnstoffpolymerisate eignen sich daher sehr gut als Lacke z. B. für Fahrzeugkarosserien, wo sie zu dauerhaften, hochglänzenden, harten und lösungsmittelbeständigen Beschichtungen führen können.

Ethylenisch ungesättigte polymerisationsfähige Verbindungen, die in ihrer monomeren Form bereits Harnstoffgruppen im Molekül enthalten, sind bisher nur in geringer Zahl bekannt geworden. Zum Teil werden diejenigen bekannten ethylenisch ungesättigten monomeren Harnstoffderivate, die noch mindestens eine freie Isocyanatgruppe besitzen, in ihrer monomeren oder über ihren ethylenisch ungesättigten Rest bereits auch polymerisierten oder copolymerisierten Form als latente, d. h. an der freien Isocyanatgruppe blockierte Vernetzungsmittel in härtbaren Lacken und Beschichtungsmassen eingesetzt, wo sie bei höheren Temperaturen durch Reaktion mit funktionellen Gruppen des Lack- bzw. Beschichtungsharzes zur einer Aushärtung des Bindemittels führen können.

Aus der EP-PS 3870 sind bereits ethylenisch ungesättigte Harnstoffderivate mit (Meth-)Allylgruppen und deren Verwendung als Comonomere bei der Emulsionspolymerisation bekannt. Daraus durch Emulsionscopolymerisation hergestellte Dispersionen sollen sich als Bindemittel zur Herstellung von Dispersionsfarben mit verbesserter Naßhaftung eignen. Bei ihrer Verwendung als Comonomere zeigen diese Monomeren jedoch die bei der Allylpolymerisation bekannten Nachteile. Über eine eventuelle Verwendbarkeit der Polymeren bzw. Copolymeren für Oberflächenbeschichtungen oder zur Herstellung von korrosionsschützenden Überzügen auf Metallen ist nichts bekannt.

Es ist ferner z. B. unter der Bezeichnung WAM[+)]-IV-TM eine - im Handel erhältliche ethylenisch ungesättigte monomere Verbindung der Formel (1),

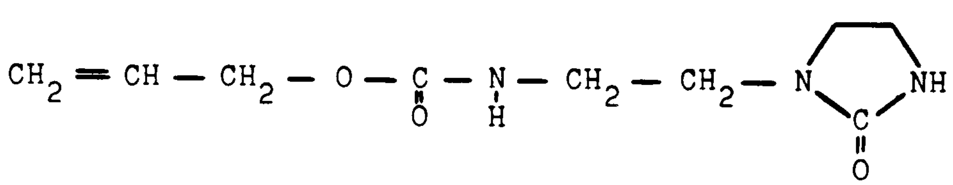

(1)

[+)] WAM = Wet Adhesion Monomer

die eine cyclische Harnstoffgruppe enthält, bekannt. Sie wird bei der Herstellung üblicher Kunststoffdispersionen durch Emulsionspolymerisation als Comonomeres eingesetzt und soll den resultierenden Copolymerisatdispersionen bei ihrer Verwendung als Bindemittel in Dispersionsfarben eine verbesserte Naßhaftung auf Alkydharzuntergründen verleihen.

Aus der EP-OS 197 635 sind ethylenisch ungesättigte Harnstoffverbindungen mit (Meth-)Acrylesterresten bekannt, deren Harnstoffgruppe an dem der (Meth-)Acrylestergruppe benachbarten N-Atom durch H und am anderen N-Atom durch einen größeren organischen Rest mit mindestens 5 C-Atomen substituiert ist. Diese Harnstoffverbindungen zeigen weder in Wasser noch in den meisten organischen Lösungsmitteln nennenswerte Löslichkeiten. Sie können durch Copolymerisation mit $\alpha,\beta$-ungesättigten Carbonsäuren und weiteren Comonomeren zur Herstellung von niedrig-viskosen Verdickerdispersionen verwendet werden, die sich durch Einstellung ihres pH-Wertes auf etwa 9 in hochviskose wäßrige Lösungen überführen lassen. Diese Produkte sollen eine bessere Verseifungsbeständigkeit und bessere Elektrolytbeständigkeiten, vergleichsweise zu anderen üblichen Verdickern, besitzen und zur Verbesserung der rheologischen Eigenschaften von wäßrigen Systemen verwendet werden können. Über andere Verwendungen dieser Produkte ist nichts ausgeführt.

Die bisher bekannt gewordenen und Harnstoffgruppen enthaltenden Emulsionspolymerisate haben entscheidende Nachteile. So lassen sich z. B. die obengenannten monomeren Harnstoffderivate der Formel (1) wegen ihrer Allyldoppelbindung nur in unzureichendem Maße copolymerisieren, so daß ihr dadurch bedingter niedriger Anteil in den Copolymerisaten auch nur einen geringen Einfluß auf die Eigenschaften der Copolymeren ausüben kann. Dementsprechend wirken sich Copolymerisate mit Monomereinheiten der Formel (1) lediglich auf die Naßhaftung von daraus hergestellten Dispersionsfarben auf Alkydharzuntergründen vorteilhaft aus, wogegen sie jedoch hinsichtlich des Korrosionsschutzes auf Metallen keinerlei Wirkung zeigen. Auch die aus der EP-OS 197 635 bekannten Copolymerisate mit Harnstoffgruppen enthaltenden Monomereinheiten sind nicht für die Oberflächenbeschichtung fester Substrate, insbesondere nicht für den Korrosionsschutz auf Metallen, geeignet, da Filme aus den beschriebenen Dispersionscopolymerisaten, möglicherweise infolge ihres hohen Anteils an Carboxylgruppen, zu stark wasserempfindlich sind.

DE-A-2 437 639 beschreibt Dispersionspolymerisate, die mindestens 1 Gew.-% Strukturelemente der allgemeinen Formel

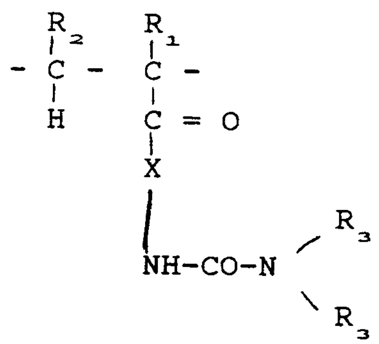

enthalten, worin

$R_1$ = H, oder $CH_3$'
$R_2$ = H ,
$R_3$ = Alkyl und
X = $O-CH_2-CH_2$ oder $O-CH_2-CH_2-CH_2$

bedeuten. Diese PolPerisate werden durch Suspensions-, Lösungs- oder Emulsionspolymerisation erhalten. Die bekannten Polymerisate eignen sich für die Herstellung von Formkörpern, Überzügen oder Klebemitteln als auch zum Veredeln von Papier.

GB-A-761 901 beschreibt Dispersionspolymere die mindestens 1 Gew.-% Monomereinheiten von Harnstoffderivaten der Formel

$CH_2$ = C(R) C00 -A-NH-CO-$NH_2$

enthalten, in der R für Wasserstoff oder eine Methyl-Gruppe steht und A eine Alkylengruppe mit 2 - 14

insbesondere 2 oder 3 Kohlenstoffatomen bedeutet. Das Polymere wird in wässriger Emulsion hergestellt und zur Behandlung von Wolle eingesetzt.

Der vorliegenden Erfindung lag somit die Aufgabe zugrunde, die vorstehend dargelegten Nachteile der bekannten Harnstoffgruppen enthaltenden Copolymeren zu überwinden und insbesondere Polymere mit Harnstoffgruppen verfügbar zu machen, die sich vorzugsweise durch übliche Emulsionspolymerisation herstellen lassen und sich sodann vorteilhaft und ohne zusätzliche Wärmebehandlung als Beschichtungsmittel, insbesondere für den Korrosionsschutz von Metallen, ferner zur Herstellung von Filmen, Fasern, Klebemitteln, Lacken, Pressmassen, Formkörpern, teilweise als Verdicker in flüssigen Medien, als Imprägniermittel für poröse Untergründe sowie als Hilfsstoffe in der Leder-, Textil-, Papier- und Baustoffindustrie verwenden lassen.

Es wurde nun überraschenderweise gefunden, daß man die vorgenannten Schwierigkeiten überwinden kann, wenn man durch Suspensions- oder Emulsionspolymerisation hergestellte Dispersionspolymerisate auf der Basis von ethylenisch ungesättigten Monomeren verwendet, die mindestens 1 Gew.-% Monomereinheiten aus ethylenisch ungesättigten Harnstoffderivaten der Formel I enthalten,

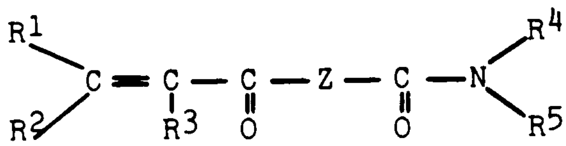

(I)

wobei in Formel I die Reste $R^1$ bis $R^5$ und Z folgendes bedeuten:

$R^1$, $R^2$, $R^3$, die gleich oder verschieden sein können, = H oder $CH_3$,

Z =

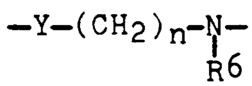

oder

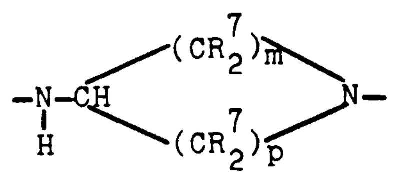

,

Y = Sauerstoff oder NH, n = 2 bis 4, vorzugsweise 2,

$R^6$ = gegebenenfalls substituiertes $(C_1-C_4)$-Alkyl,

$R^7$ = H oder $CH_3$ und m, p = jeweils mindestens die Zahl 1, vorzugsweise m + p = 3 bis 5,

$R^4$,$R^5$, die gleich oder verschieden sein können, = H, gegebenenfalls substituiertes $(C_1-C_{30})$-Alkyl, vorzugsweise $(C_1-C_{18})$-Alkyl, gegebenenfalls substituiertes $-(C_kH_{2k})$-OH mit k = 1 bis 8, vorzugsweise 2 bis 4, gegebenenfalls substituiertes $(C_6-C_{10})$-Aryl, gegebenenfalls substituiertes $(C_7-C_{30})$-Aralkyl, gegebenenfalls substituiertes $(C_5-C_8)$-Cycloalkyl, einen gegebenenfalls substituierten 5 bis 7-gliedrigen Heterocyclus oder einen aus $R^4$ und $R^5$ gemeinsam mit dem N-Atom gebildeten und gegebenenfalls substituierten Heterocyclus.

Der Rest $R^4$ in Formel I steht vorzugsweise für H, wenn Z den Rest

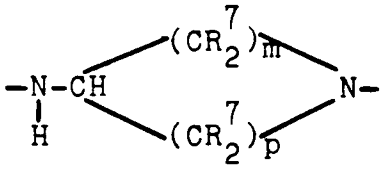

und $R^5$ einen gegebenenfalls substituierten 5 bis 7-gliedrigen Heterocyclus, einen gegebenenfalls substituierten $(C_5-C_8)$-Cycloalkylrest oder einen gegebenenfalls substituierten Arylrest, bedeutet.

Bevorzugt sind erfindungsgemäß solche monomeren Harnstoffderivate, bei denen in Formel I $R^1$, $R^2$ = H und

$R^3$ = $CH_3$, oder $R^1$, $R^2$ = H, $R^3$ = $CH_3$ und

Z =

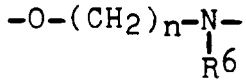

mit $R^6$ = $-C(CH_3)_3$ bedeutet.

Die erfindungsgemäß als monomere Ausgangsverbindungen eingesetzten polymerisationsfähigen bzw. copolymerisationsfähigen ethylenisch ungesättigten Harnstoffderivate der vorstehend angegebenen Formel I sind Gegenstand der am gleichen Tag eingereichten europäischen Patentanmeldung EP-A-0343476.

Erfindungsgemäß werden besonders bevorzugt diejenigen monomeren Harnstoffderivate der Formel I zur Polymerisation bzw. Copolymerisation eingesetzt, die mäßige bis gute Löslichkeiten in Wasser und/oder in organischen Lösungsmitteln und/oder in copolymerisationsfähigen ethylenisch ungesättigten Comonomeren aufweisen.

Gegenstand der Erfindung sind daher Dispersionspolymerisate auf der Basis von ethylenisch ungesättigten Monomeren, die Monomereinheiten aus Harnstoffderivaten mit $\alpha,\beta$-ethylenischungesättigten Carboxy- oder Carbamidresten enthalten und vorzugsweise durch Emulsions-, Suspensions- oder Perl-Polymerisation bzw. -Copolymerisation oder gegebenenfalls durch Lösungspolymerisation hergestellt worden sind, oder wäßrige Dispersionen oder gegebenenfalls Lösungen dieser Dispersionspolymerisate, dadurch gekennzeichnet, daß die Dispersionspolymerisate 1 bis 100 Gew-%, vorzugsweise 1 bis 30 Gew.-%, insbesondere 5 bis 20 Gew.-%, Monomereinheiten aus ethylenisch ungesättigten Harnstoffderivaten der Formel I enthalten, wobei Formel I die vorstehend angegebene Bedeutung hat.

Die Verbindungen der Formel I können in ihrer monomeren, der Formel I entsprechenden Form nach bekannten Methoden durch Umsetzung von ethylenisch ungesättigten Isocyanaten mit Ammoniak oder Aminen, oder durch Umsetzung von ethylenisch ungesättigten Aminen mit Isocyanaten in Abwesenheit von Wasser in Substanz hergestellt werden, wobei man zur besseren Reaktionsführung die Umsetzungen vorteilhaft in inerten organischen Lösungsmitteln oder auch in sog. Reaktivverdünnern, das sind unter den Umsetzungsbedingungen sich inert verhaltende copolymerisationsfähige ethylenisch ungesättigte Monomere, wie z. B. Vinylester, (Meth)-Acrylester, Vinylaromaten und ähnliche Monomere, mit denen später die Copolymerisation durchgeführt werden soll, durchführen kann.

Gegenstand der Erfindung sind ferner Verfahren zur Herstellung der erfindungsgemäßen Dispersionspolymerisate bzw. Dispersionscopolymerisate durch radikalisch initiierte Lösungs-, Emulsions-, Suspensions- oder Perl-Polymerisation von Harnstoffderivaten der Formel I bzw. -Copolymerisation von Harnstoffderivaten der Formel I mit anderen bekannten ethylenisch ungesättigten und copolymerisationsfähigen Monomeren. Besonders bevorzugt ist die Emulsionspolymerisation im Batch-, Voremulsions- oder Zudosier-Verfahren. Wasserlösliche Harnstoffderivate der Formel I können in wäßriger Lösung homopolymerisiert und/oder copolymerisiert werden, wobei im Falle der Homopolymerisation das Polymerisat in der wäßrigen Lösung in manchen Fällen als unlösliches Produkt ausfallen und, z. B. durch Filtration, in feinteiliger Form isoliert werden kann. Ebenso können Harnstoffderivate der Formel I, die in inerten organischen Lösungsmitteln löslich sind, in organischer Lösung homopolymerisiert und/oder copolymerisiert werden, wobei insbesondere im Falle der Homopolymerisation das Polymerisat in dem organischen Lösungsmittel in manchen Fällen als unlösliches Produkt ausfallen und, z. B. durch Filtration, in feinteiliger Form isoliert werden kann.

Bevorzugt wird die Polymerisation und insbesondere die Copolymerisation in wäßrigem Medium durchgeführt, wobei in den meisten Fällen stabile wäßrige Dispersionen, insbesondere Copolymerisat-Dispersionen, erhalten werden können. Bei der Copolymerisation von Harnstoffderivaten der Formel I mit anderen ethylenisch ungesättigten und copolymerisationsfähigen Comonomeren ist die Copolymerisation in wäßrigem Medium, vorzugsweise die Emulsionspolymerisation, unter Bildung von wäßrigen Copolymerisatdispersionen besonders bevorzugt. Insbesondere können durch Emulsionspolymerisation besonders stabile wäßrige Kunststoffdispersionen im Sinne der Erfindung erhalten werden, die für zahlreiche Einsatzgebiete vorteilhaft verwendet werden können.

Erfindungsgemäß können die Emulsionscopolymerisate vorzugsweise als stabile fein- bis grobdisperse wäßrige Latices mit Feststoffgehalten von vorzugsweise 10 bis 70 Gew.-% erhalten werden. Beispielsweise können bei der Emulsionscopolymerisation die Harnstoffderivate der Formel I entsprechend ihrer Löslichkeit entweder in wäßriger Lösung und/oder in wäßriger Suspension und/oder in den übrigen Comonomeren gelöst und/oder auch darin suspendiert der Copolymerisationsreaktion zugeführt werden. Die erfindungsgemäß erhältlichen Polymerisat- bzw. Copolymerisat-Dispersionen, die im Bedarfsfall gegebenenfalls mit Wasser verdünnt oder durch Wasserentzug in üblicher Weise aufkonzentriert werden können, ergeben nach Auftragen dünner Schichten der Dispersion auf feste Substrate und anschließendem Trocknen harte, auf den meisten Substraten gut haftende, glänzende und witterungsbeständige Filme, die trotz der molekularen

Seitenkettenständigkeit der Harnstoffgruppen in den Makromolekülen eine überraschend gute Korrosionsschutzwirkung z. B. auf Metalloberflächen, insbesondere auf Eisen und Stahl, zeigen. Die erfindungsgemäß erhältlichen Dispersionspolymerisate bzw. -copolymerisate können z. B. auch in wasserfreier Pulverform gewonnen werden, indem man den wäßrigen Dispersionen oder gegebenenfalls Lösungen den Wasseranteil entzieht, z. B. durch Sprühtrocknung oder durch Ausfällen des Polymerisatanteils und Filtration.

Erfindungsgemäße copolymere Dispersionspolymerisate können außer den Monomereinheiten aus Harnstoffderivaten der Formel I 0 bis 99 Gew.-%, vorzugsweise 70 bis 99 Gew.-%, insbesondere 80 bis 95 Gew.-%, Comonomereinheiten, vorzugsweise solche aus folgenden copolymerisationsfähigen Monomeren, enthalten: Vinylester von ($C_1$-$C_{18}$)-Carbonsäuren, insbesondere Vinylacetat, Vinylpropionat, Vinylversatat, Vinyllaurat, Vinylstearat; (Meth-)Acrylester von ($C_1$-$C_{18}$)-Alkoholen, insbesondere Methylmethacrylat, Butylmethacrylat, Oktylmethacrylat, Ethylacrylat, Isobutylacrylat, 2-Ethylhexylacrylat; Vinylaromaten mit bis zu 18 C-Atomen, insbesondere Styrol und Vinyltoluol; Vinylchlorid, Ethylen, Acrylnitril, Diester von Maleinsäure und/oder Fumarsäure mit $C_1$-$C_{18}$-Alkoholen, ferner Vinylpyrrolidon. Comonomereinheiten können sowohl einzeln als auch zu mehreren in den copolymeren Dispersionspolymerisaten enthalten sein. Besonders bevorzugt sind in den Dispersionspolymerisaten diejenigen Comonomereinheiten, die in wäßrigen Dispersionen verseifungsbeständig sind und stabile copolymere Produkte bilden können. Der Anteil an Comonomereinheiten in den copolymeren Dispersionspolymerisaten richtet sich sowohl hinsichtlich ihrer Art als auch hinsichtlich ihrer Menge nach den für das copolymere Endprodukt gewünschten anwendungstechnischen Eigenschaften, wobei zur Ermittlung und Einstellung der Anteile die dem Fachmann bekannten Auswahlkriterien Anwendung finden können.

Bei Verwendung erfindungsgemäßer Dispersionspolymerisate in Form von wäßrigen Dispersionen sollte deren minimale Filmbildungstemperatur (MFT) unterhalb oder im Bereich der vorgesehenen Anwendungstemperatur liegen, d. h., vorzugsweise zwischen 0 und 80 °C , insbesondere zwischen 0 und 40 °C. Werden Dispersionspolymerisate mit härterer Einstellung verwendet, so können zum Erreichen der erforderlichen Filmbildungstemperatur übliche Filmbildehilfsmittel oder äußere Weichmacher mitverwendet werden. Ist dies nicht erwünscht, so sollte die MFT besonders bevorzugt im Bereich zwischen 0 und 25 °C liegen. Beispielsweise eignen sich folgende Monomereinheitenkombinationen in Kombination mit Monomereinheiten aus Harnstoffderivaten der Formel I, z. B. ganz besonders in den nachstehend angegebenen Gewichtsverhältnissen (GT = Gewichtsteile), als Bestandteil von copolymeren Dispersionspolymerisaten im Sinne der Erfindung:

| | |
|---|---|
| Butylacrylat / Methylmethacrylat | 10-90 GT / 90-10 GT |
| Butylacrylat / Styrol | 10-90 GT / 90-10 GT |
| Oktylacrylat / Methylmethacrylat | 5-80 GT / 95-20 GT |
| Oktylacrylat / Styrol | 5-80 GT / 95-20 GT |
| Vinylacetat / Butylacrylat | 40-80 GT / 60-20 GT |
| Vinylacetat / Vinylversatat | 50-80 GT / 50-20 GT |

Hinsichtlich des Eigenschaftsbildes der erfindungsgemäß zu verwendenden Dispersionspolymerisate kann es in manchen Fällen vorteilhaft sein, wenn die Dispersionspolymerisate neben den bereits genannten Comonomereinheiten noch weitere Comonomereinheiten aus copolymerisationsfähigen ethylenisch ungesättigten Monomeren mit funktionellen Resten, vorzugsweise Resten aus der Gruppe -OH, $-SO_3H$ bzw. deren Salzen, $-N(R^8)_2$, $-N(R^9)_3$, -COOH bzw. deren Salzen, $-CON(R^{10})_2$ oder Epoxid enthalten. Vorzugsweise bedeuten dabei $R^8$ = ($C_1$-$C_6$)-Alkyl oder H, $R^9$ = ($C_1$-$C_{18}$)-Alkyl, ($C_7$-$C_{22}$)-Aralkyl, Glycidyl, H, ($C_1$-$C_4$)-Hydroxyalkyl, ($C_1$-$C_6$)-Carboxyalkyl und $R^{10}$ = ($C_1$-$C_6$)-Alkyl, H, Methylol, ($C_1$-$C_4$)-Alkoxy, ($C_2$-$C_6$)-Alkylsulfonsäure bzw. deren Salze. Solche Comonomereinheiten können in den Dispersionspolymerisaten vorzugsweise in Mengen von 0 bis 60 Gew.-%, insbesondere 0,1 bis 40 Gew.-%, besonders bevorzugt 0,3 bis 5 Gew.-%, bezogen auf das Dispersionspolymerisat, enthalten sein und bevorzugt aus Einheiten von z. B. folgenden Monomeren bestehen: Hydroxyethyl(meth-)acrylat, Hydroxypropyl(meth-)acrylat, Polyhydroxypropyl(meth-)acrylat, Glycidylmethacrylat, (Meth-)Acrylsäure, Maleinsäure, Fumarsäure, Itakonsäure sowie die Halbester der drei letzteren, Dimethylaminoneopentyl(meth-)acrylat, Dimethylaminopropyl-(meth-)acrylamid, Dimethylaminoethyl(meth-)acrylat, 2-N-Morpholinoethyl(meth-)acrylat, tert.-Butylaminoethyl(meth-)acrylat, (Meth-)Acrylamid, N-Methylol(meth-)acrylamid, Trimethylammoniumethylacrylatchlorid, Benzyl-dimethylammoniumethylmethacrylat-chlorid, Trimethylammoniumneopentylacrylatmethosulfat, Acrylamidopropyltrimethylammonium-chlorid, Diallyldimethylammonium-chlorid. Ferner Vinylsulfonsäure, (Meth)-Acrylsäure-(1-propylsulfonsäure-3)-ester, Acrylamidomethylpropansulfonsäure, Acrylamidomethylpropanphosphonsäure und/oder deren Salze.

Bei wäßrigen Dispersionen erfindungsgemäßer Dispersionspolymerisate, die Monomereinheiten mit funktionellen Gruppen enthalten, kann es vorteilhaft sein und ist bei der Emulsionspolymerisation allgemein üblich, zur Stabilisierung der Dispersionen oberflächenaktive Verbindungen (Emulgatoren) und/oder Schutzkolloide zu verwenden. Die Konzentration solcher Hilfsmittel kann bei Emulgatoren vorzugsweise 0 bis 20 Gew.-%, insbesondere 0,1 bis 7 Gew.-%, und bei Schutzkolloiden vorzugsweise 0 bis 5 Gew.-%, insbesondere 0,1 bis 2 Gew.-%, jeweils bezogen auf das Dispersionspolymerisat, betragen.

Als Emulgatoren kommen übliche nichtionische Tenside, vorzugsweise z. B. aus der Gruppe der grenzflächenaktiven Umsetzungsprodukte von aliphatischen, cycloaliphatischen, araliphatischen, aliphatischaromatischen, aromatischen Carbonsäuren, Alkoholen, Phenolen, Aminen mit Epoxiden, wie z. B. Ethylenoxid, sowie Blockcopolymerisate aus verschiedenen Epoxiden, wie z. B. Ethylenoxid und Propylenoxid, zur Anwendung. Ferner können übliche anionische Tenside, vorzugsweise z. B. tensioaktive Ammonium- sowie Alkalisalze von Fettsäuren (Seifen), Fettalkoholsulfaten, Isäthionsäureäthern von Fettalkoholen, Alkansulfonaten, Alkylbenzolsulfonaten, (oxethylierten) Sulfobernsteinsäureestern, polyoxethylierten Fettalkoholsulfaten, Alkylphenol- oder (Alkyl-)Naphtholpolyoxethylatsulfaten und Fettalkoholphosphaten zur Anwendung gelangen. Als weitere Emulgatoren kommen z. B. auch übliche grenzflächenaktive primäre, sekundäre und tertiäre Fettamine in Kombination mit organischen oder anorganischen Säuren sowie außerdem tensioaktive quaternäre Alkylammoniumverbindungen in Frage. Darüber hinaus können in manchen Fällen auch bekannte amphotere Tenside mit zwitterionischer Struktur, beispielsweise vom Betaintyp, wie z. B. Alkylamidopropylbetaine, vorteilhaft sein. Die genannten Emulgatoren können sowohl einzeln als auch, soweit sie miteinander verträglich sind, in Kombination untereinander oder miteinander in üblicher Weise verwendet werden.

Gegebenenfalls können in den Dispersionen auch übliche Schutzkolloide mitverwendet werden, und zwar bevorzugt solche auf der Basis von hochmolekularen, HO-, $(R)_2N$-, $(R)_3{}^+N$-, HOOC- oder ROOC-Gruppen tragenden organischen Verbindungen, wobei R z. B. vorzugsweise einen aliphatischen Rest mit 1 bis 8 C-Atomen bedeuten kann, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind solche von nichtionogener oder kationischer Struktur, wie z.B. Zelluloseäther, Polyvinylalkohole, Polysaccharide, Polyvinylpyrrolidone, wobei diese Verbindungen bevorzugt durch Aminogruppen, quaternäre Ammoniumgruppen, Carboxyl- bzw. Carboxylatgruppen sowie Carboxyalkylgruppen (Estergruppen) substituiert sein können. Quaternäre Ammoniumgruppen können z.B. durch Substitution mittels Kationisierungsreagenzien, wie z.B. Glycidyltrimethylammoniumchlorid, in die zugrundeliegenden Makromoleküle eingeführt werden. Kationische Polyvinylalkohole können z.B. auch durch Verseifen entsprechender amino- und/oder ammoniumgruppenhaltiger Vinylacetatcopolymerisate erhalten werden. Die zu verwendenden Schutzkolloidmengen richten sich nach den gewünschten Dispersionseigenschaften, insbesondere der Feinteiligkeit der Dispersionspartikel. Höhere Schutzkolloidmengen wirken der Feinteiligkeit der Dispersionen im allgemeinen entgegen.

Zur Auslösung der Polymerisation bzw. Copolymerisation können bei der Herstellung erfindungsgemäßer Dispersionspolymerisate alle z.B. in der Emulsionspolymerisation üblichen, vorzugsweise wasserlöslichen, und Radikalketten initiierenden Systeme, wie Azoverbindungen (Azo-bisisobutyronitril), Peroxide (z.B. Benzoylperoxid), Perester (tert.-Butylperacetat) oder Percarbonate (Dicyclohexylperoxidicarbonat), die auch anionischer Natur sein können, verwendet werden. Bevorzugte radikalische Initiatoren sind wasserlösliche Verbindungen wie z.B. 2,2′-Azobis- (2-amidinopropan)-dihydrochlorid, 2,2′-Azobis(N,N′-dimethylenisobutyramidin)-dihydrochlorid, 4,4′-Azobis-(4-cyanovaleriansäure), $H_2O_2$,tert.-Butylhydroperoxid, Persulfate wie Ammoniumpersulfat, Natriumpersulfat, Kaliumpersulfat, Redox-Systeme wie $H_2O_2$ und Ascorbinsäure, Peroxide und mehrwertige Metallsalze, tert.-Butylhydroperoxid und Rongalit, wobei Redox-Systeme vor allem zur Senkung des Restmonomerengehaltes in der Nachreaktionsphase der Polymerisation vorteilhaft sein können, ferner energiereiche Strahlung sowie übliche Photoinitiatoren.

Zur Molekulargewichtssteuerung können insbesondere bei der Emulsions-, Suspensions- oder Perl-Polymerisation auch übliche Regler, wie z.B. Merkaptane oder Halogenkohlenwasserstoffe zur Molekulargewichtserniedrigung, oder aber, gegebenenfalls bis zu 5 Gew.-%, bezogen auf die Gesamtmonomerenmenge, mehrfach ethylenisch ungesättigte oder mehrfachfunktionelle und zur Vernetzung befähigte Verbindungen, wie z.B. Divinylbenzol, Ethylenglykoldimethacrylat, Ethylenglykoldiacrylat, Butandioldimethacrylat, Butandioldiacrylat, Triallylcyanurat, Melamin, Isocyanatoethylmethacrylat zur Molekulargewichtserhöhung verwendet werden.

Die Herstellung erfindungsgemäßer Dispersionspolymerisate kann bevorzugt nach bekannten Verfahren der radikalisch initiierten Emulsionspolymerisation (Batch-, Voremulsions- oder Dosierverfahren), gegebenenfalls unter Druck sowie gegebenenfalls unter Mitverwendung von Emulgatoren, Schutzkolloiden, Dispergiermitteln, Molekulargewichtsreglern und pH-Wert-Regulatoren, erfolgen, wobei insbesondere wäßrige

Dispersionen, mit Gehalten an Dispersionspolymerisatfeststoff von vorzugsweise 10 bis 70 Gew.-%, insbesondere 20 bis 55 Gew.-%, bezogen auf die Dispersion, erhalten werden können. Auch die Einstellung von niedrigeren oder höheren Feststoffgehalten in den Dispersionen ist nach üblichen Methoden möglich. Der pH-Wert der wäßrigen Dispersionen liegt üblicherweise im Bereich von 3-9, vorzugsweise 3,5 bis 8,5. Auch die Isolierung der Dispersionspolymerisate, vorzugsweise in Pulverform, ist aus den Dispersionen nach üblichen Methoden möglich, vorzugsweise z. B. durch Sprühtrocknung oder durch Vermischen der Dispersion mit flüssigen Fällungsmitteln nach üblichen Methoden.

Als Lösungsmittel für wasserfreie erfindungsgemäße Dispersionspolymerisate kommen gegebenenfalls z.B. aliphatische und vorzugsweise aromatische Kohlenwasserstoffe, halogenierte Kohlenwasserstoffe,höhere Alkanole, Äther mit höheren Alkylresten sowie cyclische Äther wie Tetrahydrofuran und Dioxan, ferner Ketone sowie Ester in Frage.

Es ist prinzipiell auch möglich, Polymerisate vom Typ der erfindungsgemäßen Dispersionspolymerisate z. B. durch radikalisch initiierte Lösungspolymerisation z.B. in Wasser oder in organischen Lösungsmitteln herzustellen und z.B. die gegebenenfalls in organischen Lösungsmitteln resultierenden organischen Polymerisatlösungen unter Emulgatorzusatz in Wasser zu emulgieren, anschließend das organische Lösungsmittel abzudestillieren und dadurch zu wäßrigen Polymerisatdispersionen zu gelangen. Dieser Weg ist jedoch aufwendig und gegebenenfalls umweltbelastend im Gegensatz zu der bevorzugten Emulsions-, Suspensions- oder Perl-Polymerisation in wäßrigem Medium.

Bei der Emulsionspolymerisation zur Herstellung erfindungsgemäßer Dispersionspolymerisate wird üblicherweise und vorzugsweise so verfahren, daß man einen Teil des oder der zu verwendenden monomeren Harnstoffderivate der Formel I entweder allein oder im Gemisch mit anderen bekannten und copolymerisationsfähigen Monomeren in der wäßrigen Phase vorlegt, die Polymerisation durch radikalische Initiierung startet und das restliche Monomere bzw. Monomerengemisch unter Rühren und Aufrechterhaltung der benötigten Polymerisationstemperatur im Bereich von 20 bis 100 °C, vorzugsweise 50 bis 90 °C, gegebenenfalls in gelöster oder in voremulgierter Form, innerhalb von 1 bis 8 Stunden dem Polymerisationsgefäß zudosiert. In manchen Fällen kann es auch vorteilhaft sein, daß man die gesamte Monomerenmenge und die wäßrige Phase in dem Polymerisationsreaktor vorlegt und die Polymerisationsreaktion in der Form eines Batchansatzes durchführt.

Die erfindungsgemäßen Dispersionspolymerisate können sowohl in Substanz als auch in Form ihrer wäßrigen Dispersionen oder wäßrigen Lösungen oder gelöst in organischen Lösungsmitteln für eine Reihe verschiedener Einsatzgebiete in sehr vorteilhafter Weise verwendet werden. Bevorzugt sind die Produkte erfindungsgemäß als Beschichtungsmasse für feste Substrate, insbesondere als korrosionsschützende Beschichtungsmasse für Metalle, vorzugsweise für Eisen und Stahl, als Ausgangsmaterial für die Herstellung von Filmen, Folien, Fasern, Klebstoffen, Lacken, Pressmassen und Formkörpern, als Verdicker in flüssigen wäßrigen oder gegebenenfalls nichtwäßrigen Zubereitungen und als Imprägniermittel für poröse Substrate, ferner auch als Hilfsstoffe zum Verkleben von Leder, Textilien, Papier, als Bindemittel bei der Faserlederherstellung, der Papierherstellung, der Papierveredlung und der Textilimprägnierung sowie auch in der Bauindustrie als Bindemittel bei der Herstellung von Beton, Mörtel, Putz und Anstrichen, verwendbar.

Die Erfindung wird durch die nachstehenden Beispiele näher erläutert.

**Beispiel 1**

In einem 2 1-Dreihalskolben mit Rührer, Tropftrichter und Rückflußkühler werden 240,5 g entsalztes Wasser (E-Wasser) und 3,75 g einer 50 gew.-%igen wäßrigen Lösung von Natrium-Nonylphenolpolyglykoläthersulfat (Emulgator) vorgelegt. Aus 240 g E-Wasser, 7,5 g 50 gew.-%ige wäßrige Natrium-Nonylphenolpolyglykoläthersulfatlösung, 193 g Methylmethacrylat, 182 g Butylacrylat, 75 g Methacrylsäure, 3,75 g Acrylsäure, 37,5 g N-Methyl-N'-(2-methacryloyl)-ethylharnstoff und 1,7 g Ammoniumpersulfat (APS) wird eine Emulsion hergestellt. 15 g dieser Monomeremulsion werden in die vorgelegte wäßrige Emulgatorlösung gegeben und die Vorlage unter Rühren auf 80 °C erwärmt. Durch Zugabe von 0,175 g APS in die Vorlage bei 80 °C wird die Polymerisation gestartet und es wird unter Rühren bei 82 bis 84 °C die restliche Monomeremulsion innerhalb von 3,5 Stunden zudosiert. Nach einer Nachreaktionsphase von 2,5 Stunden wird das Reaktionsgemisch auf Raumtemperatur (RT) abgekühlt. Eine Stunde nach Ende der Monomeremulsionszudosierung werden dem Reaktionsgemisch 7,5 ml 17 gew.-%iger wäßriger Ammoniak und nach erfolgter Abkühlung auf RT weiterer 17 gew.-%iger wäßriger Ammoniak zugesetzt, um die resultierende Dispersion auf pH 8,5 einzustellen. Man erhält eine Dispersion mit einem Feststoffgehalt von 43,9 Gew.-%.

**Vergleichsbeispiel 1**

Es wird entsprechend dem Beispiel 1 eine Dispersion mit der Abänderung hergestellt, daß die Monomerkomponente N-Methyl -N′-(2-methacryloyl-)ethylharnstoff (37,5 g) in der Rezeptur des Beispiels 1 weggelassen wurde. Die bie der Polymerisation erhaltene und auf pH 8,5 eingestellte Dispersion hat einen Feststoffgehalt von 43,9 Gew.-%.

**Beispiel 2**

**Anwendungsprüfungen**

Die Dispersionspolymerisate wurden in wäßriger Dispersionsform als Klarlack geprüft. Dazu wurden die Dispersionen des Beispiels 1 und des Vergleichsbeispiels 1 jeweils als solche mit einer 75 µm Rakel auf die Oberflächen von entfetteten, phsophatierten (= decapierten) Stahlblechen beidseitig aufgezogen und nach erfolgter Filmbildung 14 Tage bei Raumtemperatur an der Luft nachgetrocknet, wobei auf den Stahlprüfblechen jeweils ein ca. 35 µm dicker, festhaftender Klarlackfilm resultierte. Die solchermaßen beschichteten Prüfbleche wurden anschließend einem Wasserlagerungstest in destilliertem Wasser bei Raumtemperatur unterworfen, um die Korrosionsschutzwirkung der Dispersionspolymerisatfilme auf das Stahlblech zu prüfen. Das Ergebnis ist in der Tabelle 1 zusammengefaßt wiedergegeben und zeigt das experimentell ermittelte Korrosionsverhalten der beschichteten Stahlprüfkörper und die überraschend gute korrosionsschützende Wirkung des Klarlacks aus erfindungsgemäßem Dispersionspolymerisat des Beispiels 1, vergleichsweise zum Ergebnis mit dem Klarlack aus Dispersionspolymerisat des Vergleichsbeispiels 1, dessen Makromoleküle keine Harnstoffgruppen tragenden Monomereinheiten enthalten.

**Tabelle 1**

Korrosionsverhalten von beidseitig mit Klarlackfilmen (ca. 35 µm dick) beschichteten Stahlprüfblechen in destilliertem Wasser bei 20°C.

| Lagerungsdauer (Stunden) in dest. $H_2O$ bei 20°C | Korrosionsbewertungszahlen von 0 bis 5 (0 = keine Korrosion, 5 = sehr starke Korrosion) | | |
|---|---|---|---|
| | KBZ=Korrosionsblasenzahl KBG=Korrosionsblasengröße | Korrosionsbewertungszahlen an Stahlprüfblechen mit Klarlackfilmen aus: | |
| | | Beisp.1 | Vergl.-Beisp. 1 |
| 24 | KBZ | 0 | 3 |
| | KBG | 0 | 0,5 |
| 48 | KBZ | 0 | 4 |
| | KBG | 0 | 2 |
| 72 | KBZ | 0 | 5 |
| | KBG | 0 | 3 |
| 500 | KBZ | 0,5 | Wasserlagerungstest abgebrochen, da die Oberfläche der Stahlprüfkörper durch Rost stark zerstört war. |
| | KBG | 0,5 | |

Gemäß dem Versuchsergebnis mit dem Klarlackfilm des Vergleichsbeispiels 1 war die Oberfläche der Stahlprüfkörper bereits nach 72 Stunden Wassereinwirkung durch Rost stark zerstört, während bei den mit erfindungsgemäßem Klarlack des Beispiels 1 beschichteten Prüfkörpern auch nach 500 Stunden Wassereinwirkung die Oberfläche der Stahlprüfkörper nur geringe Korrosionserscheinungen zeigte.

**Patentansprüche**
**Patentansprüche für folgende Vertragsstaaten : AT, BE, CH, DE, FR, GB, GR, IT, LI, NL, SE**

**1.** Dispersionspolymerisate auf der Basis von ethylenisch ungesättigten Monomeren, die Monomereinheiten aus Harnstoffderivaten mit $\alpha,\beta$-ethylenisch ungesättigten Carboxy- oder Carbamidresten enthalten und durch Lösungs-, Emulsions-, Suspensions- oder Perl-Polymerisation bzw. -Copolymerisation hergestellt worden sind, oder Lösungen oder wäßrige Dispersionen dieser Dispersionspolymerisate, dadurch gekennzeichnet, daß die Dispersionspolymerisate mindestens 1 Gew.-% Monomereinheiten aus ethylenisch ungesättigten Harnstoffderivaten der Formel I enthalten,

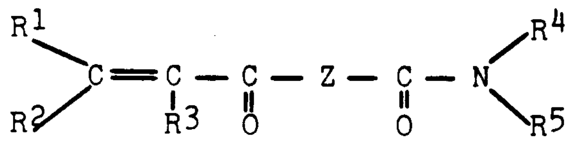 (I)

wobei in Formel I die Reste $R^1$ bis $R^5$ und Z folgendes bedeuten:

$R^1$, $R^2$, $R^3$, die gleich oder verschieden sein können, = H oder $CH_3$,

Z =

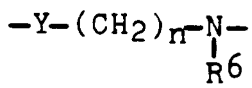 oder 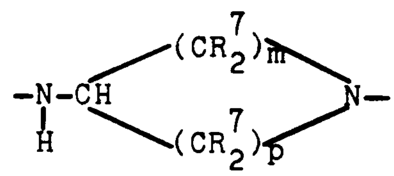 ,

Y = Sauerstoff oder NH, n = 2 bis 4, vorzugsweise 2,

$R^6$ = gegebenenfalls substituiertes $(C_1$-$C_4)$-Alkyl,

$R^7$ = H oder $CH_3$ und m, p = jeweils mindestens die Zahl 1, vorzugsweise m + p = 3 bis 5,

$R^4$,$R^5$, die gleich oder verschieden sein können, = H, gegebenenfalls substituiertes $(C_1$-$C_{30})$-Alkyl, vorzugsweise $(C_1$-$C_{18})$-Alkyl, gegebenenfalls substituiertes $-(C_kH_{2k})$-OH mit k = 1 bis 8, vorzugsweise 2 bis 4, gegebenenfalls substituiertes $(C_6$-$C_{10})$-Aryl, gegebenenfalls substituiertes $(C_7$-$C_{30})$-Aralkyl, gegebenenfalls substituiertes $(C_5$-$C_8)$-Cycloalkyl, einen gegebenenfalls substituierten 5 bis 7-gliedrigen Heterocyclus oder einen aus $R^4$ und $R^5$ gemeinsam mit dem N-Atom gebildeten und gegebenenfalls substituierten Heterocyclus.

**2.** Dispersionspolymerisate nach Anspruch 1, dadurch gekennzeichnet, daß in Formel I der Rest $R^4$ für H steht, wenn Z den Rest

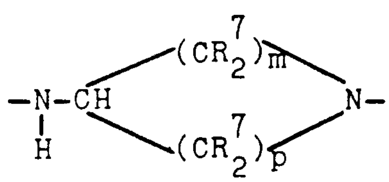

und $R^5$ einen gegebenenfalls substituierten 5 bis 7-gliedrigen Heterocyclus, einen gegebenenfalls substituierten $(C_5$-$C_8)$-Cycloalkylrest oder einen gegebenenfalls substituierten Arylrest bedeutet.

**3.** Dispersionspolymerisate nach Anspruch 1 und/oder 2, dadurch gekennzeichnet, daß in Formel I $R^1$, $R^2$ = H und $R^3$ = $CH_3$, oder $R^1$, $R^2$ = H, $R^3$ = $CH_3$ und Z =

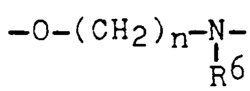

mit $R^6$ = $-C(CH_3)_3$ bedeutet.

**4.** Dispersionspolymerisate nach einem oder mehreren der Ansprüche 1 bis 3, dadurch gekennzeichnet, daß sie 1 bis 100 Gew.-%, vorzugsweise 1 bis 30 Gew.-%, insbesondere 5 bis 20 Gew.-%,

Monomereinheiten aus Verbindungen der Formel I enthalten.

5. Dispersionspolymerisate nach einem oder mehreren der Ansprüche 1 bis 4, dadurch gekennzeichnet, daß sie außer den Monomereinheiten der Formel I bis zu 99 Gew.-% Comonomereinheiten aus der Gruppe üblicher copolymerisationsfähiger Vinylester, Methacrylester, Acrylester, Vinylaromaten, Acrylnitril, Ethylen oder Vinylchlorid enthalten.

6. Dispersionspolymerisate nach einem oder mehreren der Ansprüche 1 bis 5, dadurch gekennzeichnet, daß sie Comonomereinheiten aus copolymerisationsfähigen ethylenisch ungesättigten Monomeren mit funktionellen Resten aus der Gruppe -OH, $-SO_3H$ bzw. deren Salzen, $-N(R^8)_2$, $-N(R^9)_3$, -COOH bzw. deren Salzen, $-CON(R^{10})_2$ oder Epoxid, wobei $R^8$ = $(C_1-C_6)$-Alkyl oder H, $R^9$ = $(C_1-C_{18})$-Alkyl, $(C_7-C_{22})$-Aralkyl, Glycidyl, H, $(C_1-C_4)$-Hydroxyalkyl, $(C_1-C_6)$-Carboxyalkyl und $R^{10}$ = $(C_1-C_6)$-Alkyl, H, Methylol, $(C_1-C_4)$-Alkoxy, $(C_2-C_6)$-Alkylsulfonsäure bzw. deren Salze bedeutet, enthalten.

7. Dispersionspolymerisate nach einem oder mehreren der Ansprüche 1 bis 6, dadurch gekennzeichnet, daß sie in Form von wäßrigen Dispersionen vorliegen, deren minimale Filmbildungstemperatur (MFT) im Bereich von 0 bis 80 °C liegt.

8. Dispersionspolymerisate nach einem oder mehreren der Ansprüche 1 bis 7, dadurch gekennzeichnet, daß die Monomereinheiten der Formel I in ihrer monomeren Form mäßige bis gute Löslichkeiten in Wasser und/oder in organischen Lösungsmitteln und/oder in copolymerisationsfähigen ethylenisch ungesättigten Comonomeren aufweisen.

9. Dispersionspolymerisate nach einem oder mehreren der Ansprüche 1 bis 8, dadurch gekennzeichnet, daß sie als wäßrige Dispersion mit 10 bis 70 Gew.-% Feststoffgehalt vorliegen.

10. Verfahren zur Herstellung von Harnstoffgruppen enthaltenden Dispersionspolymerisaten bzw. -copolymerisaten oder deren wäßrige Dispersionen auf der Basis von Harnstoffgruppen enthalfenden ethylenisch ungesattigten Monomeren und gegebenenfalls weiteren ethylenisch ungesättigten und copolymerisationsfahigen Monomeren durch radikalisch initiierte Emulsions-, Suspensions-, Perl- oder Lösungs-Polymerisation, vorzugsweise Emulsionspolymerisation, gegebenenfalls unter Mitverwendung üblicher Emulgatoren, Schutzkolloide, Lösungsmittel, Dispergiermittel, Netzmittel, Molekulargewichtsregler, Radikalkettenstarter, pH-Wert-Regulatoren, vorzugsweise bei Temperaturen zwischen 20 und 100 °C, sowie Isolierng der Dispersionspolymerisate in Substanz, in gelöster Form oder in Dispersionsform, vorzugsweise in wäßriger Dispersionsform, nach einem oder mehreren der Ansprüche 1 bis 9, dadurch gekennzeichnet, daß man als Harnstoffgruppen enthaltende Monomere 1 bis 99 Gew.-% ethylenisch ungesättigte Harnstoffderivate der Formel I verwendet.

11. Verwendung der Dispersionspolymerisate nach einem oder mehreren der Ansprüche 1 bis 10 als Beschichtungsmasse für feste Substrate, insbesondere als korrosionsinhibierende Überzugsmasse für Metalle, als Ausgangsmaterial für die Herstellung von Filmen, Folien, Fasern, Klebstoffen, Lacken, Pressmassen und Formkörpern, als Verdicker in flüssigen wäßrigen oder gegebenenfalls nichtwäßrigen Zubereitungen und als Imprägniermittel für poröse Substrate. Ferner als Hilfsstoffe zum Verkleben von Leder, Textilien, Papier, als Bindemittel bei der Faserlederherstellung, der Papierherstellung, der Papierveredlung und der Textilimprägnierung, in der Bauindustrie als Bindemittel bei der Herstellung von Beton, Mörtel, Putz und Anstrichen.

**Patentansprüche für folgenden Vertragsstaat : ES**

1. Verfahren zur Herstellung von Harnstoffgruppen enthaltenden Dispersionspolymerisaten bzw. -copolymerisaten oder deren wäßrige Dispersionen auf der Basis von Harnstoffgruppen enthalfenden ethylenisch ungesättigten Monomeren und gegebenenfalls weiteren ethylenisch ungesättigten und copolymerisationsfähigen Monomeren durch radikalisch initiierte Emulsions-, Suspensions-, Perl- oder Lösungs-Polymerisation, vorzugsweise Emulsionspolymerisation, gegebenenfalls unter Mitverwendung üblicher Emulgatoren, Schutzkolloide, Lösungsmittel, Dispergiermittel, Netzmittel, Molekulargewichtsregler, Radikalkettenstarter, pH-Wert-Regulatoren, vorzugsweise bei Temperaturen zwischen 20 und 100 °C, sowie Isolierng der Dispersionspolymerisate in Substanz, in gelöster Form oder in Dispersionsform, vorzugsweise in wäßriger Dispersionsform, dadurch gekennzeichnet, daß man als Harnstoffgruppen enthaltende Monomere 1 bis 99 Gew.-% ethylenisch ungesättigte Harnstoffderivate der Formel I verwendet,

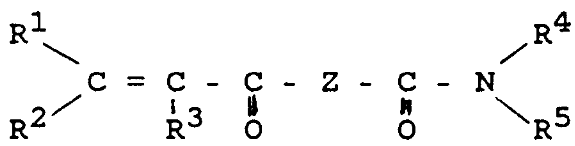

(I)

wobei in Formel I die Reste $R^1$ bis $R^5$ und Z folgendes bedeuten:

$R^1$, $R^2$, $R^3$, die gleich oder verschieden sein können, = H oder $CH_3$,

Z =

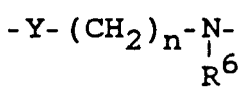

oder

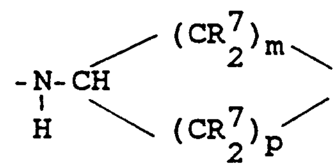

,

Y = Sauerstoff oder NH, n = 2 bis 4, vorzugsweise 2,

$R^6$ = gegebenenfalls substituiertes ($C_1$-$C_4$)-Alkyl,

$R^7$ = H oder $CH_3$ und m, p = jeweils mindestens die Zahl 1, vorzugsweise m + p = 3 bis 5,

$R^4$,$R^5$, die gleich oder verschieden sein können, = H, gegebenenfalls substituiertes ($C_1$-$C_{30}$)-Alkyl, vorzugsweise ($C_1$-$C_{18}$)-Alkyl, gegebenenfalls substituiertes -($C_kH_{2k}$)-OH mit k = 1 bis 8, vorzugsweise 2 bis 4, gegebenenfalls substituiertes ($C_6$-$C_{10}$)-Aryl, gegebenenfalls substituiertes ($C_7$-$C_{30}$)-Aralkyl, gegebenenfalls substituiertes ($C_5$-$C_8$)-Cycloalkyl, einen gegebenenfalls substituierten 5 bis 7-gliedrigen Heterocyclus oder einen aus $R^4$ und $R^5$ gemeinsam mit dem N-Atom gebildeten und gegebenenfalls substituierten Heterocyclus.

**2.** Verfahren nach Anspruch 1, dadurch gekennzeichnet, daß in Formel I der Rest $R^4$ für H steht, wenn Z den Rest

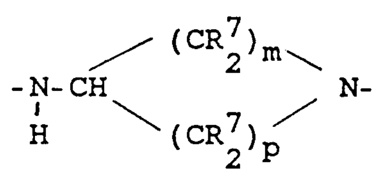

und $R^5$ einen gegebenenfalls substituierten 5 bis 7-gliedrigen Heterocyclus, einen gegebenenfalls substituierten ($C_5$-$C_8$)-Cycloalkylrest oder einen gegebenenfalls substituierten Arylrest bedeutet.

**3.** Verfahren nach Anspruch 1 und/oder 2, dadurch gekennzeichnet, daß in Formel I $R^1$, $R^2$ = H und $R^3$ = $CH_3$, oder $R^1$, $R^2$ = H, $R^3$ = $CH_3$ und Z =

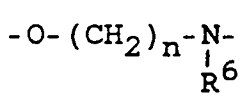

mit $R^6$ = -C($CH_3$)$_3$ bedeutet.

**4.** Verfahren nach einem oder mehreren der Ansprüche 1 bis 3, dadurch gekennzeichnet, daß man 1 bis 30 Gew.-%, insbesondere 5 bis 20 Gew.-%, Monomere der Formel I verwendet.

**5.** Verfahren nach einem oder mehreren der Ansprüche 1 bis 4, dadurch gekennzeichnet, daß man außer den Monomeren der Formel I bis zu 99 Gew.-% Comonomere aus der Gruppe üblicher copolymerisationsfähiger Vinylester, Methacrylester, Acrylester, Vinylaromaten, Acrylnitril, Ethylen oder Vinylchlorid verwendet.

**6.** Verfahren nach einem oder mehreren der Ansprüche 1 bis 5, dadurch gekennzeichnet, daß man als Comonomere copolymerisationsfähige, ethylenisch ungesättigte Monomere mit funktionellen Resten aus der Gruppe -OH, $-SO_3H$ bzw. deren Salzen, $-N(R^8)_2$, $-N(R^9)_3$, -COOH bzw. deren Salzen, $-CON(R^{10})_2$ oder Epoxid, wobei $R^8$ = $(C_1-C_6)$-Alkyl oder H, $R^9$ = $(C_1-C_{18})$-Alkyl, $(C_7-C_{22})$Aralkyl, Glycidyl, H, $(C_1-C_4)$-Hydroxyalkyl, $(C_1-C_6)$-Carboxyalkyl und $R^{10}$ = $(C_1-C_6)$-Alkyl, H, Methylol, $(C_1-C_4)$-Alkoxy, $(C_2-C_6)$-Alkylsulfonsäure bzw. deren Salze bedeutet, verwendet.

**7.** Verfahren nach einem oder mehreren der Ansprüche 1 bis 6, dadurch gekennzeichnet, daß man wäßrige (Co-)Polymerisat-Dispersionen herstellt, deren minimale Filmbildungstemperatur (MFT) im Bereich von 0 bis 80 °C liegt.

**8.** Verfahren nach einem oder mehreren der Ansprüche 1 bis 7, dadurch gekennzeichnet, daß die Monomeren der Formel I mäßige bis gute Löslichkeiten in Wasser und/oder in organischen Lösungsmitteln und/oder in copolymerisationsfähigen ethylenisch ungesättigten Comonomeren aufweisen.

**9.** Verfahren nach einem oder mehreren der Ansprüche 1 bis 8, dadurch gekennzeichnet, daß die erhaltenen wäßrigen Dispersionen 10 bis 70 Gew.-% Feststoffgehalt aufweisen.

**10.** Verwendung der Dispersionspolymerisate, hergestellt nach einem oder mehreren der Ansprüche 1 bis 9, als Beschichtungsmasse für feste Substrate, insbesondere als korrosionsinhibierende Überzugsmasse für Metalle, als Ausgangsmaterial für die Herstellung von Filmen, Folien, Fasern, Klebstoffen, Lacken, Pressmassen und Formkörpern, als Verdicker in flüssigen wäßrigen oder gegebenenfalls nichtwäßrigen Zubereitungen und als Imprägniermittel für poröse Substrate. Ferner als Hilfsstoffe zum Verkleben von Leder, Textilien, Papier, als Bindemittel bei der Faserlederherstellung, der Papierherstellung, der Papierveredlung und der Textilimprägnierung, in der Bauindustrie als Bindemittel bei der Herstellung von Beton, Mörtel, Putz und Anstrichen.

**Claims**
**Claims for the following Contracting States : AT, BE, CH, DE, FR, GB, GR, IT, LI, NL, SE**

**1.** A dispersion polymer based on ethylenically unsaturated monomers, which contains monomer units of urea derivatives with $\alpha,\beta$-ethylenically unsaturated carboxyl or carboxamide radicals and has been produced by solution, emulsion, suspension or bead polymerization or copolymerization, or a solution or aqueous dispersion of this dispersion polymer, wherein the dispersion polymer contains at least 1% by weight of monomer units of ethylenically unsaturated urea derivatives of the formula I,

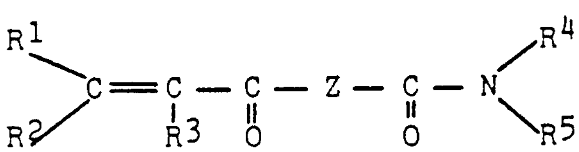
(I)

the radicals $R^1$ to $R^5$ and Z having the following meaning in formula I:
$R^1$, $R^2$, $R^3$, which may be identical or different, = H or $CH_3$,
Z =

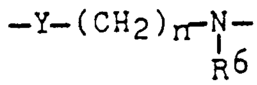 or 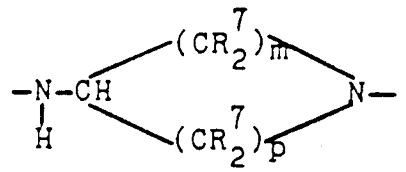 ,

Y = oxygen or NH, n = 2 to 4, preferably 2,

$R^6$ = an optionally substituted ($C_1$-$C_4$)-alkyl,

$R^7$ = H or $CH_3$ and m, p = in each case at least the number 1, preferably m + p = 3 to 5,

$R^4$, $R^5$, which may be identical or different, = H, an optionally substituted ($C_1$-$C_{30}$)-alkyl, preferably a ($C_1$-$C_{18}$)-alkyl, an optionally substituted -($C_kH_{2k}$)-OH with k = 1 to 8, preferably 2 to 4, an optionally substituted ($C_6$-$C_{10}$)-aryl, an optionally substituted ($C_7$-$C_{30}$)-aralkyl, an optionally substituted ($C_5$-$C_8$)-cycloalkyl, an optionally substituted 5- to 7-membered heterocycle or an optionally substituted heterocycle formed from $R^4$ and $R^5$ jointly with the nitrogen atom.

**2.** A dispersion polymer as claimed in claim 1, wherein in formula I the radical $R^4$ stands for H, when Z signifies the radical

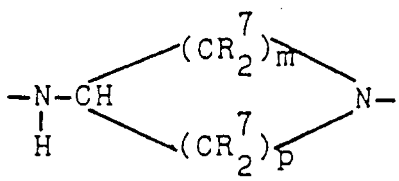

and $R^5$ signifies an optionally substituted 5- to 7-membered heterocycle, an optionally substituted ($C_5$-$C_8$)-cycloalkyl radical or an optionally substituted aryl radical.

**3.** A dispersion polymer as claimed in claim 1 and/or 2, wherein in formula I $R^1$, $R^2$ = H and $R^3$ = $CH_3$, or $R^1$, $R^2$ = H, $R^3$ = $CH_3$ and Z =

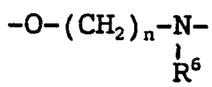

with $R^6$ = -($CH_3$)$_3$.

**4.** A dispersion polymer as claimed in one or more of claims 1 to 3, wherein it contains 1 to 100% by weight, preferably 1 to 30% by weight, particularly 5 to 20% by weight, of monomer units of compounds of the formula I.

**5.** A dispersion polymer as claimed in one or more of claims 1 to 4, wherein apart from monomer units of the formula I it contains up to 99% by weight of comonomer units from the group of conventionally copolymerizable vinyl esters, methacrylates, acrylates, vinyl aromatics, acrylonitrile, ethylene or vinyl chloride.

**6.** A dispersion polymer as claimed in one or more of claims 1 to 5, wherein it contains comonomer units of copolymerizable ethylenically unsaturated monomers having functional radicals from the group -OH, -$SO_3$H or their salts, -N($R^8$)$_2$, -N($R^9$)$_3$, -COOH or their salts, -CON($R^{10}$)$_2$ or epoxide, where $R^8$ = ($C_1$-$C_6$)-alkyl or denotes H, $R^9$ = ($C_1$-$C_{18}$)-alkyl, ($C_7$-$C_{22}$)-aralkyl, glycidyl, H, ($C_1$-$C_4$)-hydroxyalkyl, ($C_1$-$C_6$)-carboxyalkyl and $R^{10}$ = ($C_1$-$C_6$)-alkyl, H, hydroxymethyl, ($C_1$-$C_4$)-alkoxy, ($C_2$-$C_6$)-alkylsulfonic acid or their salts.

**7.** A dispersion polymer as claimed in one or more of of claims 1 to 6, wherein it is present in the form of an aqueous dispersion whose minimum film-forming temperature (MFT) is in the range of 0 to 80 °C.

8. A dispersion polymer as claimed in one or more of claims 1 to 7, wherein the monomer units of the formula I in their monomeric form have moderate to good solubilities in water and/or in organic solvents and/or in copolymerizable ethylenically unsaturated comonomers.

9. A dispersion polymer as claimed in one or more of claims 1 to 8, wherein it is present as an aqueous dispersion with a solids content of 10 to 70% by weight.

10. A process for the preparation of dispersion polymers or dispersion copolymers containing urea groups or their aqueous dispersions based on ethylenically unsaturated monomers containing urea groups and optionally further copolymerizable monomers by free-radical initiated emulsion, suspension, bead or solution polymerisation, preferably emulsion polymerization, optionally with the co-use of conventional emulsifiers, protective colloids, solvents, dispersing agents, wetting agents, molecular weight regulators, free-radical chain initiators, pH value regulators, preferably at temperatures between 20 and 100 °C, and isolating the dispersion polymers in bulk, in dissolved form or in the form of a dispersion, preferably in the form of an aqueous dispersion, as claimed in one or more of claims 1 to 9, wherein 1 to 99% by weight of ethylenically unsaturated urea derivatives of the formula I are used as monomers containing urea groups.

11. Use of a dispersion polymer as claimed in one or more of claims 1 to 10 as coating composition for solid substrates, particularly as corrosion inhibiting coating composition for metals, as starting material for the production of films, foils, fibers, adhesives, paints, molding compounds and moldings, as thickener in liquid aqueous or optionally nonaqueous compositions and as impregnating agent for porous substrates, additionally also as auxiliaries for the bonding of leather, textiles, paper, as binder in the production of fibrous synthetic leather, paper production, paper finishing and textile impregnation and also in the construction industry as binder in the production of concrete, mortar, plaster and paints.

**Claims for the following Contracting State : ES**

1. A process for the preparation of dispersion polymers or dispersion copolymers containing urea groups or their aqueous dispersions based on ethylenically unsaturated monomers containing urea groups and optionally further copolymerizable monomers by free-radical initiated emulsion, suspension, bead or solution polymerisation, preferably emulsion polymerization, optionally with the co-use of conventional emulsifiers, protective colloids, solvents, dispersing agents, wetting agents, molecular weight regulators, free-radical chain initiators, pH regulators, preferably at temperatures between 20 and 100 °C, and isolating the dispersion polymers in bulk, in dissolved form or in the form of a dispersion, preferably in the form of an aqueous dispersion wherein 1 to 99% by weight of ethylenically unsaturated urea derivatives of the formula I are used as monomers containing urea groups,

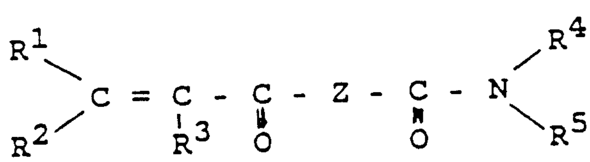 (I)

the radicals $R^1$ to $R^5$ and Z having the following meaning in formula I:

$R^1$, $R^2$, $R^3$, which may be identical or different, = H or $CH_3$,

Z =

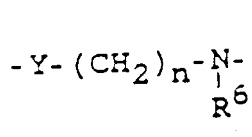 or 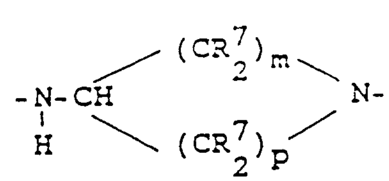 ,

Y = oxygen or NH, n = 2 to 4, preferably 2,

$R^6$ = an optionally substituted $(C_1\text{-}C_4)$-alkyl,

$R^7$ = H or $CH_3$ and m, p = in each case at least the number 1, preferably m + p = 3 to 5,

$R^4$, $R^5$, which may be identical or different, = H, an optionally substituted ($C_1$-$C_{30}$)-alkyl, preferably ($C_1$-$C_{18}$)-alkyl, an optionally substituted -($C_kH_{2k}$)-OH with k = 1 to 8, preferably 2 to 4, an optionally substituted ($C_6$-$C_{10}$)-aryl, an optionally substituted ($C_7$-$C_{30}$)-aralkyl, an optionally substituted ($C_5$-$C_8$)-cycloalkyl, an optionally substituted 5- to 7-membered heterocycle or an optionally substituted heterocycle formed from $R^4$ and $R^5$ jointly with the nitrogen atom.

**2.** A process as claimed in claim 1, wherein in formula I the radical $R^4$ stands for H, when Z signifies the radical

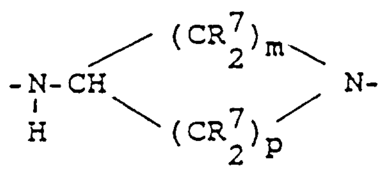

and $R^5$ signifies an optionally substituted 5- to 7-membered heterocycle, an optionally substituted ($C_5$-$C_8$)-cycloalkyl radical or an optionally substituted aryl radical.

**3.** A process as claimed in claim 1 and/or 2, wherein in formula I $R^1$, $R^2$ = H and $R^3$ = $CH_3$, or $R^1$, $R^2$ = H, $R^3$ = $CH_3$ and Z =

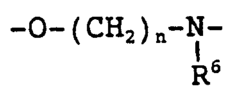

with $R^6$ = $-C(CH_3)_3$.

**4.** A process as claimed in one or more of claims 1 to 3, wherein 1 to 30% by weight, particularly 5 to 20% by weight of monomers of the formula I are used.

**5.** A process as claimed in one or more of claims 1 to 4, wherein apart from monomer units of the formula I, up to 99% by weight of comonomers from the group of conventionally copolymerizable vinyl esters, methacrylates acrylate, vinyl aromatics, acrylonitrile, ethylene or vinyl chloride are used.

**6.** A process as claimed in one or more of claims 1 to 5, wherein as comonomers, copolymerizable ethylenically unsaturated monomers having functional radicals from the group -OH, $-SO_3H$ or their salts, - $N(R^8)_2$, $-N(R^9)_3$, -COOH or their salts, $-CON(R^{10})_2$ or epoxide, where $R^8$ = ($C_1$-$C_6$)-alkyl or H, $R^9$ = ($C_1$-$C_{18}$)-alkyl, ($C_7$-$C_{22}$)-aralkyl, glycidyl, H, ($C_1$-$C_4$)-hydroxyalkyl, ($C_1$-$C_6$)-carboxyalkyl and $R^{10}$ = ($C_1$-$C_6$)-alkyl, H, hydroxymethyl, ($C_1$-$C_4$)-alkoxy, ($C_2$-$C_6$)-alkylsulfonic acid or their salts are used.

**7.** A process as claimed in any one of claims 1 to 6, wherein aqueous (co)polymer dispersions are produced whose minimum film-forming temperature (MFT) is in the range of 0 to 80 °C.

**8.** A process as claimed in one or more of claims 1 to 7, wherein the monomers of the formula I have moderate to good solubilities in water and/or in organic solvents and/or in copolymerizable ethylenically unsaturated comonomers.

**9.** A process as claimed in one or more of claims 1 to 8, wherein the aqueous dispersion obtained has a solids content of 10 to 70% by weight.

**10.** Use of a dispersion polymer produced as claimed in one or more of claims 1 to 9 as coating composition for solid substrates, particularly as corrosion inhibiting coating composition for metals, as starting material for the production of films, foils, fibers, adhesives, paints, molding compounds and moldings, as thickener in liquid aqueous or optionally nonaqueous preparations and as impregnating

agent for porous substrates, additionally also as auxiliaries for the bonding of leather, textiles, paper, as binder in the production of fibrous synthetic leather, paper production, paper finishing and textile impregnation and also in the construction industry as binder in the production of concrete, mortar, plaster and paints.

**Revendications**

**Revendications pour les Etats contractants suivants : AT, BE, CH, DE, FR, GB, GR, IT, LI, NL, SE**

**1.** Polymères en dispersion à base de monomères à insaturation éthylénique, qui contiennent des motifs monomères de dérivés de l'urée comportant des radicaux carboxy ou carbamide à insaturation $\alpha,\beta$-éthylénique, et qui ont été préparés par polymérisation ou copolymérisation en solution, en émulsion, en suspension ou en perles, ou encore solutions ou dispersions aqueuses de ces polymères en dispersion, caractérisés en ce que les polymères en dispersion contiennent au moins 1 % en poids de motifs monomères de dérivés de l'urée, à insaturation éthylénique, de formule I

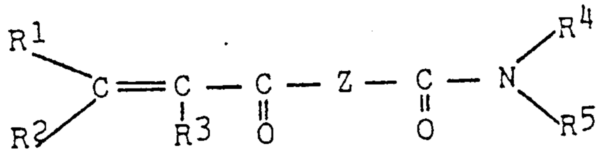
(I)

où, dans la formule I, les radicaux $R^1$ à $R^5$ et Z ont les significations suivantes :

$R^1$, $R^2$ et $R^3$, qui peuvent être identiques ou différents, représentent chacun H ou $CH_3$,

Z est

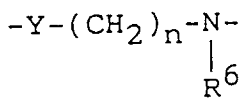

ou

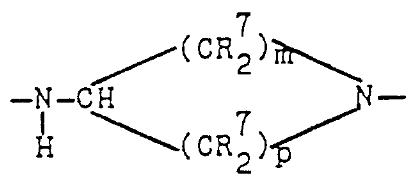

Y est l'oxygène ou NH, n vaut 2 à 4, de préférence 2,

$R^6$ est un radical alkyle en $C_1$-$C_4$ éventuellement substitué,

$R^7$ est H ou $CH_3$, et m et p valent chacun au moins 1, de préférence m + p = 3 à 5,

$R^4$ et $R^5$, qui peuvent être identiques ou différents, représentent chacun H, un radical alkyle en $C_1$-$C_{30}$, de préférence en $C_1$-$C_{18}$, éventuellement substitué, un radical -($C_kH_{2k}$)-OH éventuellement substitué dans lequel k = 1 à 8, de préférence 2 à 4, aryle en $C_6$-$C_{10}$ éventuellement substitué, aralkyle en $C_7$-$C_{30}$ éventuellement substitué, cycloalkyle en $C_5$-$C_8$ éventuellement substitué, un hétérocycle à 5 à 7 chaînons éventuellement substitué ou encore un hétérocycle obtenu à partir de $R^4$ et de $R^5$ avec l'atome d'azote, et éventuellement substitué.

**2.** Polymères en dispersion selon la revendication 1, caractérisés en ce que, dans la formule I, le radical $R^4$ est H quand Z est le radical

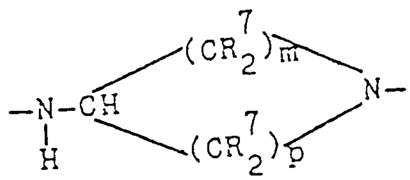

et $R^5$ est un hétérocycle à 5 à 7 chaînons éventuellement substitué, un radical cycloalkyle en $C_5$-$C_8$ éventuellement substitué ou un radical aryle éventuellement substitué.

**3.** Polymères en dispersion selon les revendications 1 et/ou 2, caractérisés en ce que dans la formule I, $R^1$ et $R^2$ sont chacun H et $R^3$ est $CH_3$, ou bien $R^1$ et $R^2$ sont chacun H, $R^3$ est $CH_3$ et Z est

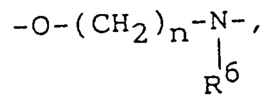

$R^6$ étant $-C(CH_3)_3$.

**4.** Polymères en dispersion selon l'une ou plusieurs des revendications 1 à 3, caractérisés en ce qu'ils contiennent de 1 à 100, de préférence de 1 à 30 et en particulier de 5 à 20 % en poids de motifs monomères de composés de formule I.

**5.** Polymères en dispersion selon l'une ou plusieurs des revendications 1 à 4, caractérisés en ce qu'ils contiennent, outre les motifs monomères de formule I, jusqu'à 99 % en poids de motifs comonomères choisis parmi l'ensemble comprenant les esters vinyliques copolymérisables usuels, les méthacrylates, les acrylates, les vinylaromatiques, l'acrylonitrile, l'éthylène et le chlorure de vinyle.

**6.** Polymères en dispersion selon l'une ou plusieurs des revendications 1 à 5, caractérisés en ce qu'ils contiennent des motifs comonomères

des monomères copolymérisables à insaturation éthylénique ayant des radicaux fonctionnels choisis parmi l'ensemble comprenant -OH, $-SO_3H$ ou ses sels, $-N(R^8)_2$, $-N(R^9)_3$, -COOH ou ses sels, $-CON(R^{10})_2$ ou époxyde, où $R^8$ est un radical alkyle en $C_1$-$C_6$ ou H, $R^9$ est un radical alkyle en $C_1$-$C_{18}$, aralkyle en $C_7$-$C_{22}$, glycidyle, H, hydroxyalkyle en $C_1$-$C_4$, carboxyalkyle en $C_1$-$C_6$, et $R^{10}$ est un radical alkyle en $C_1$-$C_6$, H, méthylol, alcoxy en $C_1$-$C_4$, acide alkylsulfonique en $C_2$-$C_6$ ou ses sels.

**7.** Polymères en dispersion selon l'une ou plusieurs des revendications 1 à 6, caractérisés en ce qu'ils se présentent sous la forme de dispersions aqueuses dont la température minimale de formation du feuil (MFT) est comprise entre 0 et 80 ° C.

**8.** Polymères en dispersion selon l'une ou plusieurs des revendications 1 à 7, caractérisés en ce que les motifs monomères de formule I présentent, sous leur forme monomère, une solubilité moyenne à bonne dans l'eau et/ou dans les solvants organiques et/ou dans les comonomères copolymérisables à insaturation éthylénique.

**9.** Polymères en dispersion selon l'une ou plusieurs des revendications 1 à 8, caractérisés en ce qu'ils se présentent sous forme d'une dispersion aqueuse ayant une teneur en extrait sec de 10 à 70 % en poids.

**10.** Procédé pour préparer des polymères ou copolymères en dispersion contenant des groupes urée, ou leurs dispersions aqueuses à base de monomères à insaturation éthylénique contenant des groupes urée et éventuellement d'autres monomères copolymérisables et à insaturation éthylénique, par polymérisation radicalaire en émulsion, en suspension, en perles ou en solution, de préférence par polymérisation en émulsion, éventuellement avec utilisation simultanée d'additifs usuels tels que des émulsifiants, des colloïdes protecteurs, des solvants, des dispersants, des mouillants, des régulateurs de masse moléculaire, des amorceurs radicalaires, des régulateurs de pH, de préférence à des

températures de 20 à 100 °C, et isolement des polymères en dispersion sans solvant, sous forme dissoute ou sous forme d'une dispersion, de préférence sous forme d'une dispersion aqueuse, selon l'une ou plusieurs des revendications 1 à 9, caractérisé en ce qu'on utilise comme monomères contenant des groupes urée 1 à 99 % en poids de dérivés de l'urée à insaturation éthylénique de formule I.

**11.** Utilisation des polymères en dispersion selon l'une ou plusieurs des revendications 1 à 10, comme composition de revêtement pour subjectiles solides, en particulier comme composition de revêtement à effet anticorrosion pour métaux,

comme matière de départ pour la fabrication de films, de feuilles, de fibres, d'adhésifs, de vernis, de mélanges à mouler par compression et d'objets moulés, comme épaississant dans les préparations liquides aqueuses ou éventuellement non aqueuses, et comme agent d'imprégnation pour subjectiles poreux, et aussi comme adjuvant pour coller le cuir, les textiles et le papier, comme liant lors de la fabrication des syndermes, de la fabrication du papier, de l'ennoblissement du papier et de l'imprégnation textile, et aussi dans l'industrie de la construction, comme liant lors de la fabrication du béton, du mortier, des enduits et des revêtements.

**Revendications pour l'Etat contractant suivant : ES**

**1.** Procédé pour préparer des polymères ou copolymères en dispersion contenant des groupes urée, ou leurs dispersions aqueuses à base de monomères à insaturation éthylénique contenant des groupes urée et éventuellement d'autres monomères copolymérisables et à insaturation éthylénique, par polymérisation radicalaire en émulsion, en suspension, en perles ou en solution, de préférence par polymérisation en émulsion, éventuellement avec utilisation simultanée d'additifs usuels tels que des émulsifiants, des colloïdes protecteurs, des solvants, des dispersants, des mouillants, des régulateurs de masse moléculaire, des amorceurs radicalaires, des régulateurs de pH, de préférence à des températures de 20 à 100 °C, et isolement des polymères en dispersion sans solvant, sous forme dissoute ou sous forme d'une dispersion, de préférence sous forme d'une dispersion aqueuse,

caractérisé en ce qu'on utilise comme monomères contenant des groupes urée 1 à 99 % en poids de dérivés de l'urée à insaturation éthylénique de formule I,

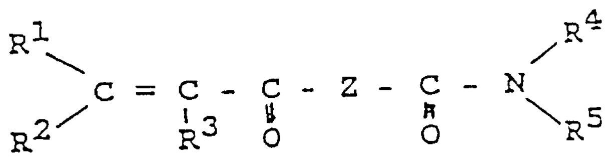

(I)

où, dans la formule I, les radicaux $R^1$ à $R^5$ et Z ont les significations suivantes :

$R^1$, $R^2$ et $R^3$, qui peuvent être identiques ou différents, représentent chacun H ou $CH_3$,

Z est

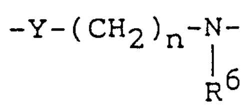

ou

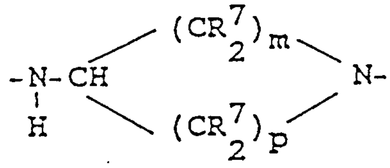

,

Y est l'oxygène ou NH, n vaut 2 à 4, de préférence 2,

$R^6$ est un radical alkyle en $C_1$-$C_4$ éventuellement substitué,

$R^7$ est H ou $CH_3$, et m et p valent chacun au moins 1, de préférence m + p = 3 à 5,

$R^4$ et $R^5$, qui peuvent être identiques ou différents, représentent chacun H, un radical alkyle en $C_1$-$C_{30}$, de préférence en $C_1$-$C_{18}$, éventuellement substitué, un radical -($C_kH_{2k}$)-OH éventuellement substitué dans lequel k = 1 à 8, de préférence 2 à 4, aryle en $C_6$-$C_{10}$ éventuellement substitué, aralkyle en $C_7$-$C_{30}$ éventuellement substitué, cycloalkyle en $C_5$-$C_8$ éventuellement substitué, un hétérocycle à 5 à 7 chaînons éventuellement substitué ou encore un hétérocycle obtenu à partir de $R^4$ et de $R^5$ avec l'atome d'azote, et éventuellement substitué.

**2.** Procédé selon la revendication 1, caractérisé en ce que, dans la formule I, le radical $R^4$ est H quand Z est le radical

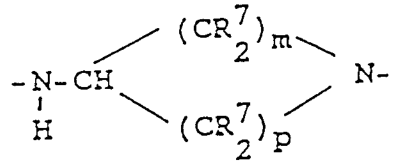

et $R^5$ est un hétérocycle à 5 à 7 chaînons éventuellement substitué, un radical cycloalkyle en $C_5$-$C_8$ éventuellement substitué ou un radical aryle éventuellement substitué.

**3.** Procédé selon les revendications 1 et/ou 2, caractérisé en ce que dans la formule I, $R^1$ et $R^2$ sont chacun H et $R^3$ est $CH_3$, ou bien $R^1$ et $R^2$ sont chacun H, $R^3$ est $CH_3$ et Z est

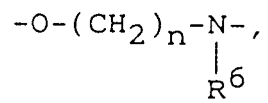

$R^6$ étant -C($CH_3$)$_3$.

**4.** Procédé selon l'une ou plusieurs des revendications 1 à 3, caractérisé en ce qu'on utilise de 1 à 30, en particulier de 5 à 20 % en poids de monomères de formule I.

**5.** Procédé selon l'une ou plusieurs des revendications 1 à 4, caractérisé en ce qu'on utilise, outre les monomères de formule I, jusqu'à 99 % en poids de comonomères choisis parmi l'ensemble comprenant les esters vinyliques copolymérisables usuels, les méthacrylates, les acrylates, les vinylaromatiques, l'acrylonitrile, l'éthylène et le chlorure de vinyle.

**6.** Procédé selon l'une ou plusieurs des revendications 1 à 5, caractérisé en ce qu'on utilise comme comonomères des monomères copolymérisables à insaturation éthylénique ayant des radicaux fonctionnels choisis parmi l'ensemble comprenant -OH, -$SO_3$H ou ses sels, -N($R^8$)$_2$, -N($R^9$)$_3$, -COOH ou ses sels, -CON($R^{10}$)$_2$ ou époxyde, où $R^8$ est un radical alkyle en $C_1$-$C_6$ ou H, $R^9$ est un radical alkyle en $C_1$-$C_{18}$, aralkyle en $C_7$-$C_{22}$, glycidyle, H, hydroxyalkyle en $C_1$-$C_4$, carboxyalkyle en $C_1$-$C_6$, et $R^{10}$ est un radical alkyle en $C_1$-$C_6$, H, méthylol, alcoxy en $C_1$-$C_4$, acide alkylsulfonique en $C_2$-$C_6$ ou ses sels.

**7.** Procédé selon l'une ou plusieurs des revendications 1 à 6, caractérisé en ce qu'on prépare des dispersions aqueuses de (co-) polymerères dont la température minimale de formation du feuil (MFT) est comprise entre 0 et 80 °C.

**8.** Procédé selon l'une ou plusieurs des revendications 1 à 7, caractérisé en ce que les monomères de formule I ont une solubilité moyenne à bonne dans l'eau et/ou dans les solvants organiques et/ou dans les comonomères copolymérisables à insaturation éthylénique.

**9.** Procédé selon l'une ou plusieurs des revendications 1 à 8, caractérisé en ce que les dispersions aqueuses opteneus ont une teneur en extrait sec de 10 à 70 % en poids.

**10.** Utilisation des polymères en dispersion préparés selon l'une ou plusieurs des revendications 1 à 9, comme composition de revêtement pour subjectiles solides, en particulier comme composition de revêtement à effet anti-corrosion pour métaux,

comme matière de départ pour la fabrication de films, de feuilles de fibres, d'adhésifs, de vernis, de mélanges à mouler par compression et d'objets moulés, comme épaississant dans les préparations liquides aqueuses ou éventuellement non aqueuses, et comme agent d'imprégnation pour subjectiles poreux, et aussi comme adjuvant pour coller le cuir, les textiles et le papier, comme liant lors de la fabrication des syndermes, de la fabrication du papier, de l'ennoblissement du papier et de l'imprégnation textile, et aussi dans l'industrie de la construction, comme liant lors de la fabrication du béton, du mortier, des enduits et des revêtements.